(19) Europäisches Patentamt

European Patent Office

Office européen des brevets

(11) EP 1 267 352 A2

(12) **EUROPEAN PATENT APPLICATION**

(43) Date of publication:
18.12.2002 Bulletin 2002/51

(51) Int Cl.7: **G11B 27/00**

(21) Application number: 02254110.6

(22) Date of filing: 13.06.2002

(84) Designated Contracting States:
**AT BE CH CY DE DK ES FI FR GB GR IE IT LI LU MC NL PT SE TR**
Designated Extension States:
**AL LT LV MK RO SI**

(30) Priority: 14.06.2001 KR 2001033526
27.09.2001 KR 2001060137
23.10.2001 KR 2001035393

(71) Applicant: **SAMSUNG ELECTRONICS CO., LTD.**
**Suwon-City, Kyungki-do (KR)**

(72) Inventors:
• **Chung, Hyun-kwon, c/o 104-906 Dongbo Apt.**
  **Gwangju-gun, Gyeonggi-do (KR)**
• **Ko, Jung-wan, c/o 103-201 Byucksan Apt.**
  **Suwon-si, Gyeonggi-do (KR)**
• **Heo, Jung-kwon,**
  **c/o 203-504 Jugong 2-danji Apt.**
  **Seoul (KR)**

(74) Representative: **Robinson, Ian Michael et al**
**Appleyard Lees,**
**15 Clare Road**
**Halifax HX1 2HY (GB)**

(54) **Information storage medium containing preload information, apparatus and method for reproducing therefor**

(57)    An information storage medium which contains preload information, a reproducing apparatus and a reproducing method are provided. The information storage medium includes: AV data which includes audio/video data; and a markup language document for displaying the AV data which is decoded and reproduced and for including a preload information that orders a reproducing apparatus to read a file to be preloaded and to store it into a memory. The information storage medium, which contains the markup language document preventing the moving pictures from being interrupted in case the AV data recorded in the DVD is reproduced and displayed through the markup language document, and a reproducing apparatus and a reproducing method are provided.

**FIG. 3**

## EP 1 267 352 A2

### Description

The present invention relates to an information storage medium which contains preload information, a reproducing apparatus and a reproducing method, and more particularly, to an information storage medium which contains AV data and multiple markup language documents that are displayed by a markup document viewer, and an apparatus and a method for playing the information storage medium.

An interactive DVD (Digital Versatile Disc) medium may be reproduced in an interactive mode based on a personal computer (PC). The interactive DVD medium contains markup language documents with AV data. The content stored in the interactive DVD medium can be reproduced in two ways, that is, in a video mode or an interactive mode. In the video mode, the content is displayed in the same way as playback on a regular DVD player is displayed, whereas in the interactive mode, the content is displayed in a display window defined by a markup language document. If the interactive mode is selected by a user, a web browser built in a personal computer (PC) displays the markup language document recorded in the interactive DVD medium and the content selected by the user in the display window defined by the markup language document.

For example, in a movie whose content is AV data, video of the movie is played in the display window defined by the markup language document, and in the remaining part of the display screen, a variety of supplementary information including scripts, stories, photos of actors and actresses, etc., can be displayed. The supplementary information can include an image file or a text file.

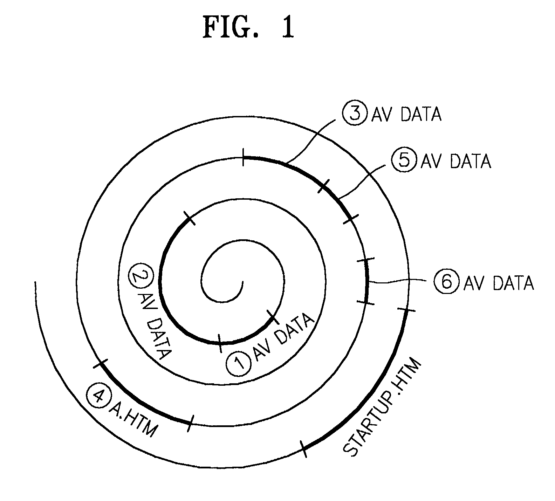

Figure 1 is an outline diagram of an interactive DVD medium where AV data is recorded.

With reference to Figure 1, on the tracks of the interactive DVD medium, AV data is recorded as a form of MPEG bit stream, and multiple markup language documents are also recorded. A markup language document can mean a web resource including various graphic image files inserted into the markup language document.

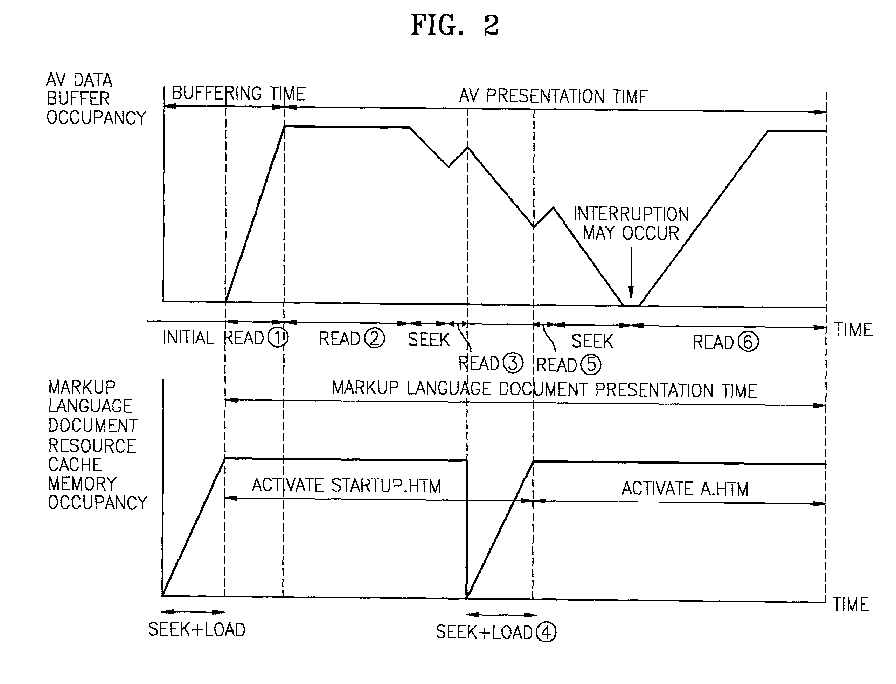

Figure 2 is a reference diagram showing an interruption that may occur while the interactive DVD medium of Figure 1 is being played.

Figure 2 shows the occupancy of a buffer memory that buffers the AV data and the occupancy of a cache memory that caches the web resources. With regard to Figures 1 and 2, for loading of the AV data to the memory and the displaying of the AV data, a pick-up device seeks and reads a file STARTUP.HTM and loads it into the cache memory. The loaded file STARTUP.HTM is activated. Actually, the AV data ① selected by the AV data presentation sequence is loaded into the buffer memory and starts to be displayed. Then, the AV data ② is loaded and displayed. After the AV data ② is completely buffered, the pick-up device of reproducing apparatus jumps to the position where the AV data ③ is recorded and starts to buffer the AV data ③. If the user requests a file A.HTM ④, the pick-up device stops buffering the AV data ③ and seeks the file A.HTM ④ and reads it to the cache memory. Meanwhile, since the AV data ③ continues to be displayed, the amount of the data to be loaded is consumed drastically. The file A.HTM ④ is activated. After the AV data ③ is completely buffered, the pick-up device buffers the AV data ⑤. If the AV data ⑤ is completely buffered, the pick-up device jumps to the position where the AV data ⑥ is recorded. In that case, exhaustion of the buffered data may happen. That is, in case of the existing interactive DVD, if the moving pictures of DVD video and the markup language documents need to be displayed synchronously (for example, when an actor is on stage, his brief history is displayed together with his moving picture), the pick-up device should stop buffering the AV data and seek and cache the related markup language documents. Therefore, the moving pictures reproducing may be interrupted temporarily.

It is an aim of the present invention to provide an information storage medium that enables content to be reproduced seamlessly in a display window defined by a markup language document, and an apparatus and a method for playing the information storage medium.

It is another aim of at least preferred embodiments of the present invention to provide an information storage medium containing a markup language document that needs to be reproduced in synchronization with the content and that is loaded to/discarded from a cache memory so that content can be reproduced seamlessly in a display window defined by a markup language document, and an apparatus and a method for playing the information storage medium.

Another preferred aim of the present invention is to provide an information storage medium that allows a file to be more efficiently preloaded so that content can be reproduced seamlessly in a display window defined by a markup language document, and an apparatus and a method for playing the optical medium.

It is another preferred aim of the present invention to provide a method for guaranteeing that sufficient data remains in a memory even though a preloading is performed during reproduction of a content.

Yet another aim of the present invention to provide a method for managing a memory so that preloading and discarding can be performed in a strict manner.

According to a first aspect of the present invention there is provided an information storage medium comprises audio/video (AV) data, and markup language documents including a preload information that orders a reproducing apparatus to read a file to be preloaded and to store it into a memory, for displaying the AV data which is decoded and reproduced.

It is preferable that the information storage medium further includes reproducing control information on the AV data and the AV data is decoded in an AV data stream with reference to the reproducing control information.

It is preferable that the information storage medium further includes a preload list file which includes the files to be preloaded, and at least one of the file to be preloaded.

It is preferable that the preload information is implemented by a link tag where the location information of the preload list file is recorded, or an Application Program Interface (API) which has the location information of the preload list file as a parameter. The preload list file includes the location information and the type of the file to be preloaded.

It is preferable that the preload information is implemented by an API which has the location information of the preload list file as a parameter. It is preferable that the location information comprises the path of the preload list file and a resource locator, which indicates one of the memory, the information storage medium, and an Internet server, which is attached to the path of the preload list file.

It is preferable that the markup language document includes discard list files which contain a discard files list, and discard information which indicates that files , which are recorded in the discard list file should be discarded from the memory.

According to a second aspect of the present invention there is provided a method for reproducing AV data recorded in an information storage medium by invoking the AV data through a markup language document, the method comprises (a) interpreting preload information included in the read markup language document, (b) retrieving files to be preloaded based on the preload information and storing the files to a cache memory, (c) reading the AV data and storing it in a buffer memory, and (d) reproducing the AV data and the files to be preloaded from the buffer memory and the cache memory, respectively, and displaying them based on the markup language document.

It is preferable that the step (a) comprises (a1) identifying the path and the type of the file to be preloaded, and in (a1), the path of a preload list file that is recorded in a link tag inserted in a region bounded by head tag is identified.

It is preferable that the step (b) comprises (b1) reading the file to be preloaded from the identified path, and (b2) processing and storing the file to be preloaded depending on the identifiedtype.

According to a third aspect of the present invention there is provided an apparatus for reproducing AV data recorded in an information storage medium with markup language documents, the apparatus comprises a reader for reading markup language documents or AV data, a memory for storing files to be preloaded or AV data, an AV decoder for decoding the AV data stored in the memory, and a presentation engine for requesting that the files to be preloaded be stored in the memory based on the interpreted preload information after interpreting a preload information included in the read markup language document, for requesting that the read AV data to be stored in the memory, and for retrieving the files to be preloaded from the memory and displaying the file together with the AV data outputted by the AV decoder.

It is preferable that the memory comprises a buffer memory for storing the AV data, and a cache memory for storing the files to be preloaded.

It is preferable that the presentation engine identifies the path and the type of the file to be preloaded based on the preload information, retrieves the files to be preloaded from the identified path, and stores the files according to the type of the files in the cache memory.

It is preferable that the presentation engine requests the reader to read the file to be preloaded or an Internet server to send the file to be preloaded, compares the amount of the space remaining in the cache memory with the amount size of the files to be preloaded and generates an error signal if the amount of the space remaining in the cache memory is less than the amount size of the files to be preloaded, and refers the cache memory to read the files to be preloaded if the resource locator attached to the path of the preload list file indicates the cache memory, or generates an error signal if there is no file to be referred in the cache memory.

According to a fourth aspect of the present invention there is provided a method for performing a preloading, the method comprises (a) identifying the speed at which a file to be preloaded is read, (b) identifying the condition that enables the buffering to be performed in such a way that relevant AV data can be reproduced seamlessly, and (c) performing the preloading at the time identified to be the optimized condition.

According to a fifth aspect of the present invention there is provided a method for recording the preload information in an information storage medium, comprising the steps of (a) generating the list of files to be preloaded, (b) identifying the speed at which the recorded files to be preloaded are read, (c) identifying the condition that enables the buffering to be performed in such a way that relevant AV data can be reproduced seamlessly, and (d) recording script program codes for performing the preloading at the time which is identified to be the optimized condition.

Also according to the present invention there is provided a method for recording data in an information storage medium comprising: (a) recording a file to be preloaded; (b) identifying the speed at which the recorded file to be preloaded is read; (c) identifying the condition that enables the buffering to be performed in such a way that relevant AV data can be reproduced seamlessly; and (d) recording source codes for performing the preloading at the time which is identified to be the optimized condition.

According to a sixth aspect of the present invention there is provided a method for managing a memory for preloading, the method comprises (a) creating and modifying a memory management table information containing the status information of files to be preloaded, and for (b) discarding the file to be preloaded based on its status information.

It is preferable that the method for managing a memory for preloading further comprises (c) performing garbage collection on the files to be preloaded based on its status information.

It is preferable that the step (b) is performed when the status of the cached file is the status as "not in use" and "discardable". It is that means the usability of the files to be preloaded is ended.

It is preferable that the step (c) comprises (c1) discarding the preloaded files to in the cache memory physically if it is not in use and is discardable, (c2) indicating the fact that the files to be preloaded no longer exists in the cache memory, and (c3) realigning the files to remain in the cache memory.

For a better understanding of the invention, and to show how embodiments of the same may be carried into effect, reference will now be made, by way of example, to the accompanying diagrammatic drawings in which:

Figure 1 is an outline diagram of an interactive DVD medium in which AV data is recorded;

Figure 2 is a reference diagram showing an interruption that may occur while the interactive DVD medium of Figure 1 is being played;

Figure 3 is a block diagram of a reproducing apparatus according to a preferred embodiment of the present invention;

Figure 4A is a reference diagram showing an embodiment of the directory structure of files in a DVD medium according to the present invention;

Figure 4B is a reference diagram showing another embodiment of the directory structure of files in the DVD medium according to the present invention;

Figure 5A is an outline diagram showing an embodiment of the volume space of the DVD medium according to the present invention;

Figure 5B is an outline diagram showing another embodiment of the volume space of the DVD medium according to the present invention;

Figure 6 is a flowchart explaining a reproducing method according to a preferred embodiment of the present invention;

Figure 7 is an embodiment of step 602 of Figure 6, where the preload information is interpreted;

Figure 8 is a first embodiment of step 603 of Figure 6, where the files to be preloaded re preloaded;

Figure 9A is a second embodiment of step 603 of Figure 6, where the files to be preloaded are preloaded;

Figure 9B is a third embodiment of step 603 of Figure 6, where the files to be preloaded are preloaded;

Figure 10 is a flowchart explaining a method for preloading the files to be preloaded when a preload list file includes the amount size of the file to be preloaded;

Figure 11 is a flowchart explaining a method for discarding at least one of the files to be preloaded that are stored in the memory;

Figure 12 is an embodiment of step 1102 of Figure 11, where the discarding is performed;

Figure 13 is a reference diagram explaining the effect of the preloading performed according to the present invention when the AV data and a markup language documents are recorded in the same order as shown in Figure 1;

Figure 14 is a detailed diagram of a part of the reproducing apparatus of Figure 3;

Figures 15 and 16A through 16F are memory maps explaining a method of managing a memory management table information and data by performing preloading, discarding and garbage collection;

Figure 17 is a reference diagram showing a case where the AV data is loaded into and exhausted in the first memory 2;

Figure 18 is a diagram showing the data alignment of the preload list file and the files to be preloaded on the information storage medium;

Figure 19A is an outline diagram of a disc, and 19B is a detailed diagram of a part of Figure 19A;

Figure 20 is a reference diagram showing the status of a first memory 2 and a second memory 3 according to the above-described embodiments; and

Figure 21 is a flowchart showing a recording method according to a preferred embodiment of the present invention.

The present invention now will be described more fully with reference to the accompanying drawings, in which preferred embodiments of the invention are shown. The markup language document defined in the specification means not only a markup language document itself but also web resources inserted into or linked with the HTML document. "∼.HTM" means not only the HTML itself but also the documents described in a mark-up language such as XML and SGML, which can be displayed via the markup document viewer.

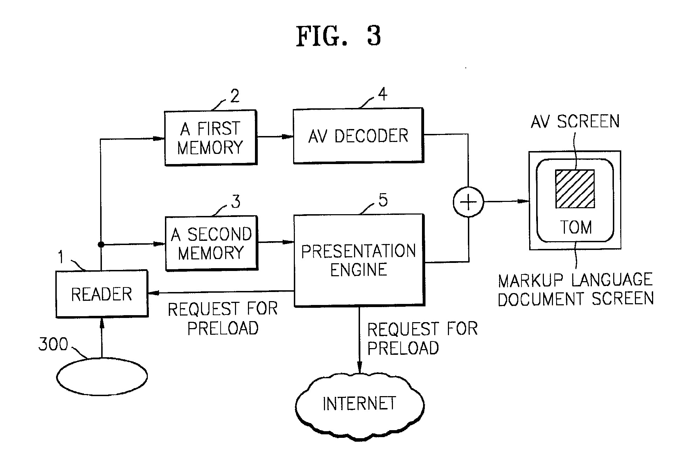

Figure 3 is a block diagram of a reproducing apparatus according to a preferred embodiment of the present invention.

With reference to Figure 3, the reproducing apparatus decodes audio/video (AV) data recorded in a DVD 300 and reproduces the AV data as an AV data stream. Then, the reproducing apparatus displays the AV data in a display window defined by a markup language document in an interactive mode and includes a reader 1, a first memory 2, a second memory 3, an AV decoder 4, and a presentation engine 5. As described later, the presentation engine 5 supports an extension of a link tag, JavaScript, and Java applet so that preload information which is implemented by the link tag, a JavaScript Application Program Interface (API), or a Java applet API, or discard information, which is implemented by a JavaScript API or a Java applet API, can be interpreted and executed.

The reader 1 reads the markup language documents or the AV data from the DVD 300. The first memory 2 is a buffer memory that buffers the AV data read by the reader 1. The second memory 3 is a cache memory that caches the retrieved markup language document file. The AV decoder 4 decodes the AV data stored in the first memory 2 and outputs the AV data stream. The presentation engine 5 interprets the preload information included in the markup language document, and requests the reader 1 to read the files to be preloaded or an Internet server (not shown) to send the files to be preloaded so that the files can be preloaded into the second memory 3 based on the interpreted preload information. When the file to be preloaded need to be displayed together with the AV data simultaneously, the presentation engine 5 invokes the file to be preloaded from the second memory 3 and displays the read file together with the AV data stream outputted by the AV decoder 4. In addition, the presentation engine 5 interprets the discard information and discards the files to be discarded from the second memory 3.

The DVD 300 according to the embodiment includes not only the AV data containing audio data or video data but also the markup language document containing the preload information and the discard information. Furthermore, a preload list file and a discard list file may be recorded in the DVD 300.

The preload list file lists the names of the files to be preloaded and information about the amount size of memory necessary for storing each file to be preloaded. The files to be preloaded is the markup language document which may need to be reproduced in synchronization with the relevant AV data and is recorded in the DVD 300 according to the embodiment. The files to be preloaded can be stored in the Internet server that can be accessed over the Internet.

The "preload information" is information which instructs that the files to be preloaded are read and stored in the cache memory. For example, the preload information can be implemented as the link tag where the path of the preload list file are inserted. The link tag is inserted into a region bounded by the head tag. In another example, the preload information can be implemented as a JavaScript API or a Java applet API which has the path and the type of the preload list file as parameters and invokes the preload list file. In a third example, the preload information can be implemented as a JavaScript API or a Java applet API which has the path and the type of the file to be preloaded as parameters and invokes the file to be preloaded without the preload list file.

A type is information that plays the similar role as the definition of a Multi-Purpose Internet Mail Extensions (MIME) header. That is, the file type information indicates the data property of the file to be preloaded. Understanding the data property helps to process the file more effectively. For example, if the type of the file are interpreted before a markup language document file is preloaded, the markup language document file can be processed without a type of the file analysis procedure. If a graphic image file is preloaded, the graphic image file can be processed to be stored as the form without the unnecessary header information in the cache memory. As a result, the memory space can be utilized effectively and the file can be reproduced at faster speeds. If an audio file is preloaded, the audio file can be re-sampled at much higher rates which are enable to be played by the reproducing apparatus and stored. If a font file is preloaded, only the necessary information for font rasterizing will be extracted and stored. That is, understanding the type of the file to be preloaded helps to perform the preloading more effectively and flexibly.

A path indicates the location where the relevant file is recorded. A resource locator can be attached to the path of the preload list file and the file to be preloaded. In fact, the markup language documents may be recorded in the DVD 300, cached in the second memory 3, or exist in the server that can be accessed over the Internet. Therefore, the resource locator of markup language documents is classified as a DVD resource locator indicating the DVD 300, a cache resource locator indicating the second memory 3, and an Internet resource locator indicating the Internet server. The resource locators can be indicated as follows in the order they were specified above.

disk0:// or dvd://

lid://

http://

Therefore, when the file A.HTM recorded in the DVD 300 is retrieved as the file to be preloaded, the path is indicated as disk0://DVD_ENAV/A.HTM. When the file A.HTM cached in the second memory 3 is invoked as the file to be preloaded, the path is indicated as lid://DVD_ENAV/A.HTM. When the file A.HTM stored in the Internet server is received as the file to be preloaded, the path is indicated as http://www.samsung.com/DVD_ENAV/A.HTM. If multiple DVDmedia loader 300 are equipped in the reproducing apparatus, the resource locators of each DVD medium can be indicated as disk0://(or dvd://), disk1://, disk2://, disk3://, ....

Even though the resource locator is attached to the path indicating the location of the file to be preloaded, the presentation engine 5 generates an error signal and ends the preloading if there is no file to be preloaded in the location indicated by the resource locator. However, if the resource locator usage scheme is unimplicit scheme, the reproducing apparatus searches the markup language document according to this sequence. Suitably, the second memory 3 is searched first. Then, if the file to be preloaded does not exist in the second memory 3, the DVD 300 is searched next.

The discard list file lists the information (name and path of the file) on the location of the file to be discarded. The discard information is the information that instructs that the files to be discarded are discarded from the second memory 3. For example, the discard information can be implemented as a JavaScript API or a Java applet API which has the location information of the discard list file as a parameter and discards the files to be discarded that is included in the discard list file. In another example, the discard information can be implemented as a JavaScript API or a Java applet API which has the path and the type of the file to be discarded as parameters and discards the file to be discarded without the discard list file.

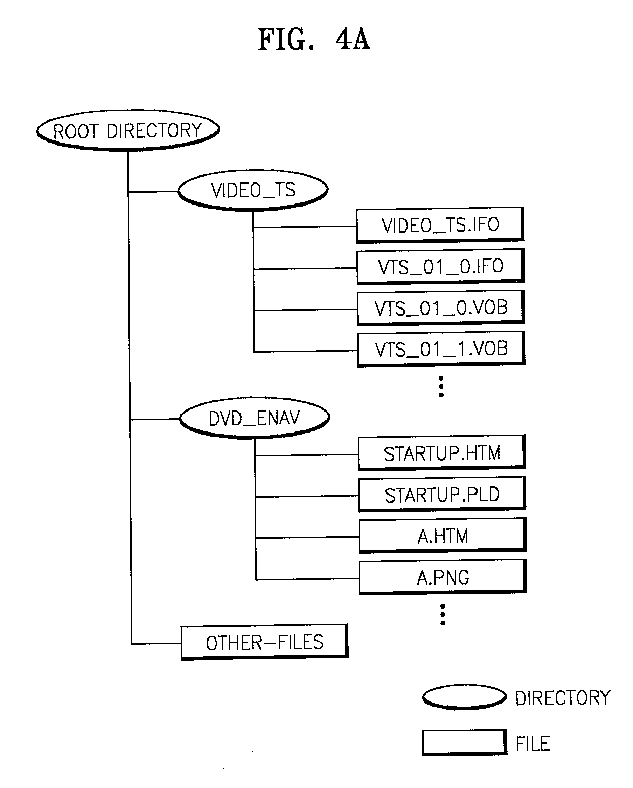

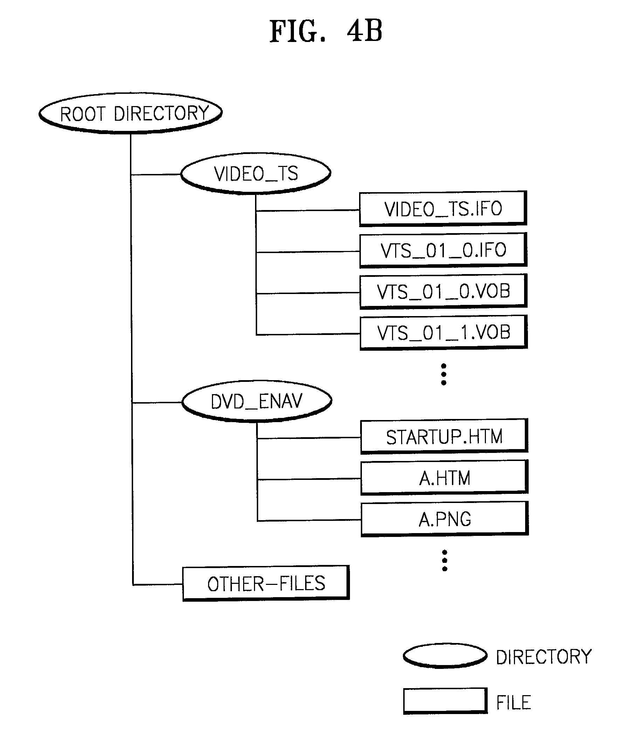

Figures 4A and 4B are reference diagrams showing the directory structure of files in the DVD 300.

With reference to Figure 4A, a root directory includes subdirectories VIDEO_TS and DVD_ENAV. VIDEO_TS is a DVD video directory that includes the AV data. DVD_ENAV is a DVD interactive directory for recording the data including the markup language document that supports the interactive function.

The DVD video directory VIDEO_TS includes files VIDEO_TS.IFO, VTS_01_0.IFO, VTS_01_0.VOB and VTS_01_1.VOB....

In the file VIDEO_TS.IFO, the reproducing control information on the entire video title sets is recorded. In the file VTS_01_0.IFO, the reproducing control information on the first video title set is recorded. In VTS_01_0.VOB and VTS_01_1.VOB...., the AV data that makes up the video title sets are recorded. More detailed configuration information is included in the DVD-Video Standard DVD-Video for Read Only Memory Disc 1.0.

The DVD interactive directory DVD_ENAV includes files DVD_ENAV.IFO, STARTUP.HTM, STARTUP.PLD, A.HTM, A.PNG, other files to be preloaded, and various types of files that are inserted into the files to be preloaded and displayed. In the file DVD_ENAV.IFO, the reproducing control information on the entire interactive information is recorded. The file STARTUP.HTM is designated as a start document. The file STARTUP.PLD is the preload list file according to the embodiment. The file A.HTM is the file to be preloaded. The file A.PNG is the graphic image file that is inserted into the file A.HTM and displayed with the file A.HTM. The directory DVD_ENAV can include other files to be preloaded and various types of files that are inserted into the files to be preloaded and displayed.

However, in Figure 4B, if the preload information included in the markup language document is implemented as the API which has the path and the type of the file to be preloaded as parameters, retrieves the file to be preloaded without the preload list file.

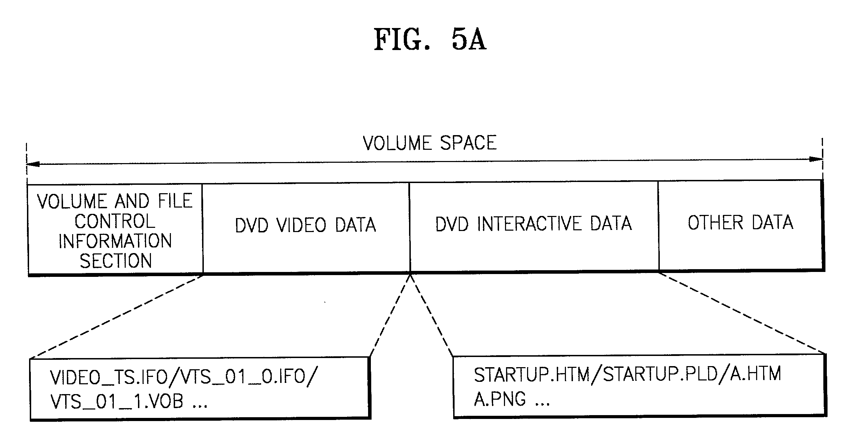

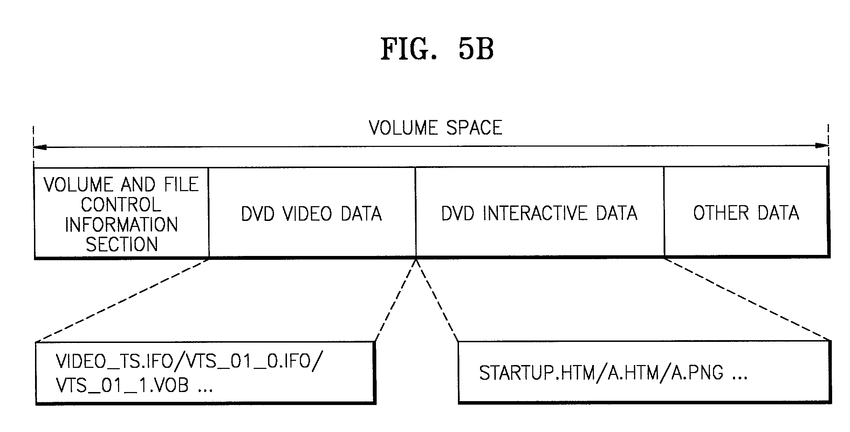

Figures 5A and 5B are outline diagrams showing embodiments of the volume space of the DVD 300.

With reference to Figure 5A, the volume space of the DVD 300 includes a control information section containing the control information on the volume and the file, a DVD video data section containing a relevant video title data and a DVD interactive data section which enables reproduction in the interactive mode.

The DVD-video data section includes the files VIDEO_TS.IFO, VTS_01_0.IFO, VTS_01_0.VOB, VTS_01_1.VOB, stored in the DVD video directory DVD_TS shown in Figure 4A. The DVD interactive data section includes the files STARTUP.HTM, STARTUP.PLD, A.HTM, and A.PNG stored in the DVD interactive directory DVD_ENAV shown in Figure 4A.

As described above, with reference to Figure 5B, if the preload information included in the markup language document is implemented as an API which has the path and the type of the file to be preloaded as parameters and retrieves the file to be preloaded without the preload list file

The present invention performs reproduction as follows.

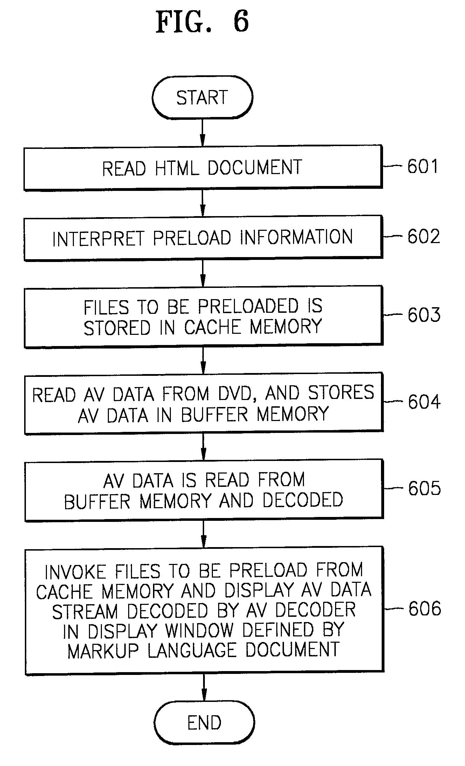

Figure 6 is a flowchart explaining a reproduction method according to a preferred embodiment of the present invention.

With reference to Figure 6, if the interactive mode is selected, the reader 1 reads the HTML document recorded in the DVD 300 in step 601. The presentation engine 5 interprets the preload information included in the HTML document and requests the reader 1 to read the file to be preloaded or the Internet server to send the file to be preloaded for performing preloading in step 602. In step 603, the files to be preloaded are stored in the second memory 3, which is the cache memory.

The reader 1 reads the relevant AV data from the DVD 300 and stores the read AV data in the first memory 2, which is the buffer memory, in step 604. The AV decoder 4 decodes the AV data stored in the first memory 1 in step 605. The presentation engine 5 invokes from the second memory 3 the files to be preloaded and displays the AV data stream decoded by the AV decoder 4 in the display window defined by the markup language document in step 606.

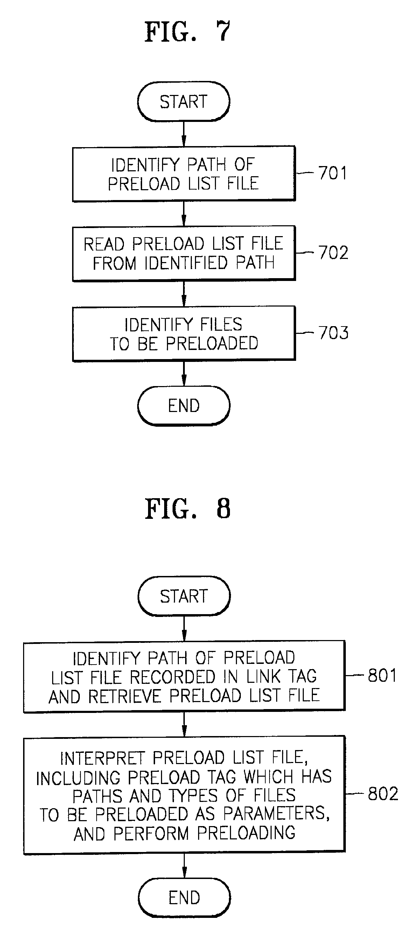

Figure 7 is an embodiment of step 602 of Figure 6, where the preload information is interpreted.

With reference to Figure 7, the presentation engine 5 identifies the path of the preload list file recorded in the markup language document in step 701 and reads the preload list file from the identified path in step 702. Then, the presentation engine 5 identifies the files to be preloaded, which is recorded in the preload list file, in step 703. Here, identifying the files to be preloaded means identifying the path and the type of the files to be preloaded.

Figure 8 is a first embodiment of step 603 of Figure 6, where the file to be preloaded is preloaded. Referring to Figure 8, the presentation engine 5 identifies the path of the preload list file recorded in the link tag inserted in the region bounded by head tag of the HTML document, and retrieves the preload list file in step 801. In step 802, the presentation engine 5 interprets the preload list file, including the preload tag which has the path and the type of the file to be preloaded as parameters, and performs preloading.

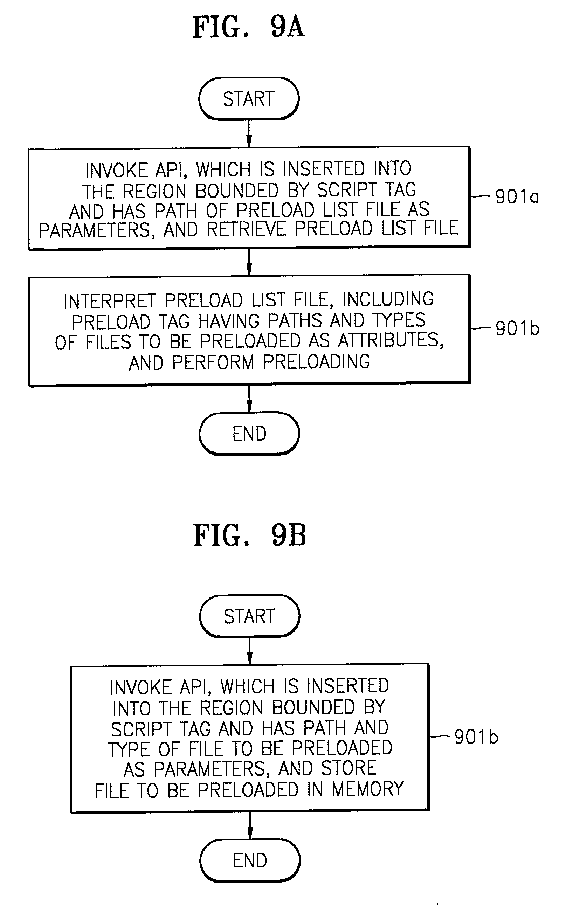

Figure 9A is a second embodiment of step 603 of Figure 6, where the files to be preloaded are preloaded. With reference to Figure 9A, the presentation engine 5 invokes by the API, which is inserted into the region bounded by script tag and has the path of the preload list file as the parameter, and retrieves the preload list file in step 901a. In step 901b, the presentation engine 5 interprets the preload list file, including the preload tag having the path and the type of the file to be preloaded as attributes, and performs preloading.

Figure 9B is a third embodiment of step 603 of Figure 6, where the file to be preloaded is preloaded. With reference to Figure 9B, the presentation engine 5 invokes the API, which is inserted into the region bounded by script tag and has the path and the type of the file to be preloaded as parameters, and stores the file to be preloaded in the memory in step 901b. In this step, since the presentation engine 5 can identify the type of the file to be preloaded, it can process the file based on the type and store it in the memory.

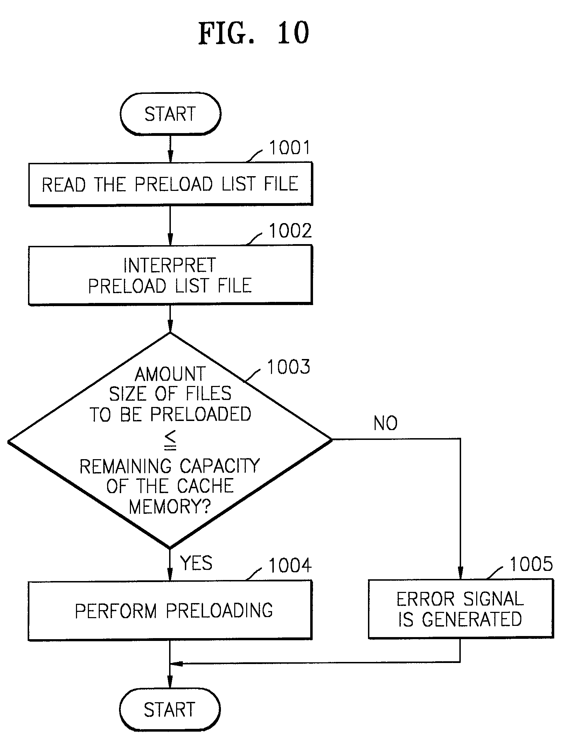

Figure 10 is a flowchart explaining a method for preloading the files to be preloaded when the preload list file includes the amount size of the files to be preloaded.

With regard to Figure 10, when the interactive mode is selected, the reader 1 reads the HTML document according to the embodiment in the DVD 300. The presentation engine 5 interprets the preload information included in the HTML document, and the reader 1 reads the preload list file in step 1001. In step 1002, the presentation engine 5 interprets the preload list file. The presentation engine 5 identifies the amount size of the files to be preloaded and compares the identified size with the remaining capacity of the cache memory in step 1003. If the amount size of the files to be preloaded is smaller than the remaining capacity of the cache memory, the presentation engine performs preloading in step 1004. If the amount size of the files to be preloaded is bigger than the remaining capacity of the cache memory, the presentation engine 5 generates an error signal and ends the preloading in step 1005.

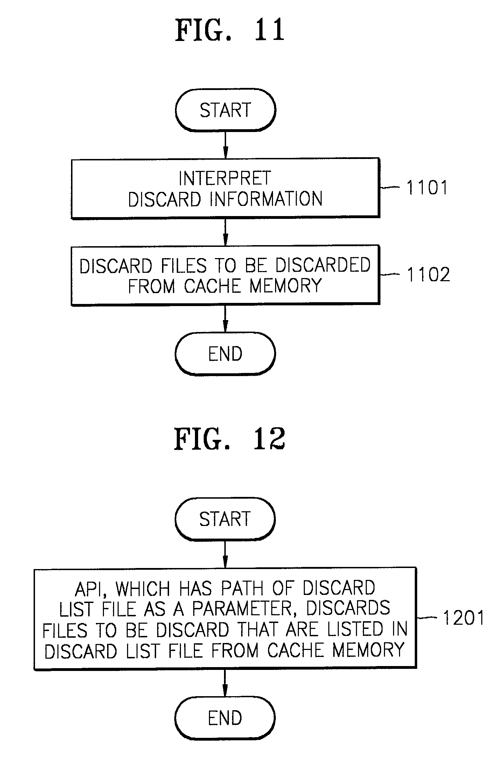

Figure 11 is a flowchart explaining a method for discarding at least one of the files that are stored in the memory.

With reference to Figure 11, the presentation engine 5 interprets the discard information included in the HTML document in step 1101 and discards the files to be discarded that is listed in the discard list file from the second memory 3, which is the cache memory, in step 1102. As identified by the script program code explained below, the preload list file and the discard list file according to the embodiment is implemented as the same file, that is, STARUP.PLD. The preload list file and the discard list file may also be implemented as two or more separate files.

Figure 12 is an embodiment of step 1102 of Figure 11, where the discarding is performed.

With reference to Figure 12, the API, which has the path of the discard list file as a parameter, discards the files to be discard that is listed in the discard list file from the second memory 3 which is the cache memory in step 1201. Here, discarding means not performing garbage collection which discards the data physically, but notifying the status that the data is discardable by using a flag or that other data can be over recorded while the data physically still remains.

The text data of the above-described file STARTUP.HTM and STARTUP.PLD may be configured as follows.

## ※ Example 1 of STARTUP.HTM

```
<?xml version="1.0" encoding="UTF-8"?>
<!DOCTYPE html PUBLIC -//DVD/DTD XHTML DVD-HTML1.0//EN"
"http://www.dvdforum.org/enav/dvdhtml-1-0.dtd">
<html>
<head>
<title>STARTUP PAGE</title>
<link rel="preload" src="dvd://dvd_enav\startup.pld"
OnError="err_preload()"
OnAbort="err_preload()">  <!--if preloading is failed, call err_preload -->
<script language="ecmascript">
<!--
function html_discard()
{
   navigator.Discard("dvd://dvd_enav\startup.htm",0);
}
function err_preload()
{
   navigator.Discard(" ",2);
   if (!navigator.Preload("dvd://dvd_enav\startup.pld",1))
   {
      alert("insufficient memory. it will change interactive mode to video
mode.")
      DvdVideo.SetVideoMode()
   }
} -->
</script>
</head>
<body bgcolor=#ffffff OnUnload="html_discard()"> <!--if document unload, call
html_discard -->
<object height="50%" width="60%" data="dvd:">
<script language="ecmascript">
<!--
   DvdVideo.Play() -->
</script></body></html>
<a href="lid:\\dvd_enav\a.htm">click to preloaded A.HTM</a>
</body>
</html>
```

The above text data includes the preload information implemented as the link tag inserted into the region bounded by the head tag. In addition, the discard information implemented as JavaScript API is inserted.

※ Example 2 of STARTUP.HTM

```
<?xml version="1.0" encoding="UTF-8"?>
<!DOCTYPE html PUBLIC -//DVD/DTD XHTML DVD-HTML1.0//EN"
"http://www.dvdforum.org/enav/dvdhtml-1-0.dtd">
<html>
<head>
<title>STARTUP PAGE</title>
<script language="ecmascript">
<!--
function html_discard()
{
   navigator.Discard("dvd://dvd_enav\startup.htm","text/xml");
}
function err_preload()
{
   navigator.Discard(" "," ");
   if
(!navigator.Preload("dvd://dvd_enav\startup.pld","text/preload"))
   {
      alert("insufficient memory. it will change interactive mode to
video mode.");
      DvdVideo.SetVideoMode();
   }
} -->
</script>
</head>
<body  bgcolor=#ffffff  OnUnload="html_discard()">  <!--if  document
unload, call html_discard -->
<object height="50%" width="60%" data="dvd:">
<script language="ecmascript">
<!--
   if
(!navigator.Preload("dvd://dvd_enav\startup.pld","text/preload"))
   {
      err_preload();
   }
   DvdVideo.Play();-->
</script></body></html>
<a href="lid:\\dvd_enav\a.htm">click to preloaded A.HTM</a>
</body>
</html>
```

The above text data includes the discard information and the preload information implemented as the Java-Script API.

## ※ Example 1 of STARTUP.PLD

```
<?xml version="1.0" encoding="UTF-8"?>
<!DOCTYPE PRELOAD PUBLIC "-\\DVD\\DTD DVD Preload List 1.0\\EN"
"http://www.dvdforum.org/enav/dvd-preload-list.dtd"-->
<preload cachesize="128KB">
<filedef type="text/xml" src="dvd://dvd_enav//a.htm" />
<filedef type="image/png" src="dvd://dvd_enav//a.png" />
</preload>
```

The above text data is an XML document and includes the amount size, the paths, and the types of the files to be preloaded.

The API for preloading/discarding used in the above script program code can be explained in detail as follows.

1. navigator.Preload (URL, flag)

It is the API that reads the specified file to be preloaded to the second memory 3. The used parameters specify the location information of the preload list file or the file to be preloaded.

URL : Path of the preload list file or the path of the file to be preloaded.

flag : when URL indicates the preload list file, flag is 1. When URL indicates the file to be preloaded, flag is 0.

return value: If the preload performing is successful, "true" is returned. If the preload performing fails, "false" is returned.

For example:

navigator.Preload("http://www.holeywood.com/tom.pld",1) According to this, the preload list file, which has the path of http://www.holeywood.com/tom.pld, is received and read out the files to be listed in the preload list file to the cache memory in advance of reproducing the files.

2. navigator.Preload (URL, resType)

It is the API that reads the indicated file to be preloaded to the second memory 3. The used parameters specify the location information of the preload list file or the file to be preloaded, and further may indicate the type of the file to be preloaded.

URL : Path of the preload list file or the path of the file to be preloaded.

resType : A type of the file to be preloaded.

return value: If the preload performing is successful, "true" is returned. If the preload performing fails, "false" is returned.

For example:

navigator.Preload ("dvd://dvd_enav/a.htm", "text/xml") According to this, the file to be preloaded that is stored in the DVD 300, which has the path of "dvd://dvd_enav/a.htm", is read. The file is a text-based xml file.

navigator.Preload ("http://www.holeywood.com/tom.htm", "text/html") According to this, a file that exists on the Internet at the locator of http://www.holeywood.com/tom.html is retrieved. The file is a text-based HTML file.

3. navigator.Discard (URL, flag)

It is the API that discards the Indicated file to be discarded from the second memory 3. The used parameters specify the location information of the discard list file or the file to be discarded.

URL : Path of the discard list file or the path of the file to be discarded.

flag : when URL indicates the preload list file, flag is 1. When URL indicates the file to be preloaded., flag is 0. If flag is 2, it instruct that all the content loaded in the cache memory is discarded from the cache memory

return value: If the discard performing is successful, "true" is returned. If the discard performing fails, "false" is returned.

For example:

navigator.Discard ('http://www.holeywood.com/tom.htm',0) If the file to be preloaded, which was retrieved from the Internet as addressing specified by "http://www.holeywood.com/tom.htm", exists in the cache memory, discard the file from the cache memory.

4. navigator.Discard (URL, resType)

It is the API that discards the indicated file to be discarded from the second memory 3. The used parameters specify the location information of the discard list file or the file to be discarded.

URL : Path of the discard list file or the path of the file to be discarded.

resType = A type of the file to be discarded

return value: If the discard performing is successful, "true" is returned. If the discard performing fails, "false" is returned.

For example:

navigator.Discard ("dvd://dvd_enav/a.htm", "text/xml") According to this, if the file which was read from the DVD 300 as addressing by "dvd://dvd_enav/a.htm", exists in the cache memory, discard the file from the cache memory. The file is a text-based xml file.

navigator.Discard ("dvd://dvd_enav/a.pld", "application/preload") According to this, if the files which is included d in the preload list file "dvd://dvd_enav/a.pld", exist in the cache memory, discard the files. The file is the discard list file.

navigator.Discard("http://www.holeywood.com/tom.htm"," text/xml") According to this, if the file which was retrieved from the Internet as addressing by "http://www.holeywood.com/tom.htm", exists in the cache memory, discard the file from the cache memory. The file is a text-based xml file.

The above-described embodiments explain the API implemented by JavaScript. The same result can be obtained when the API is implemented by a Java applet.

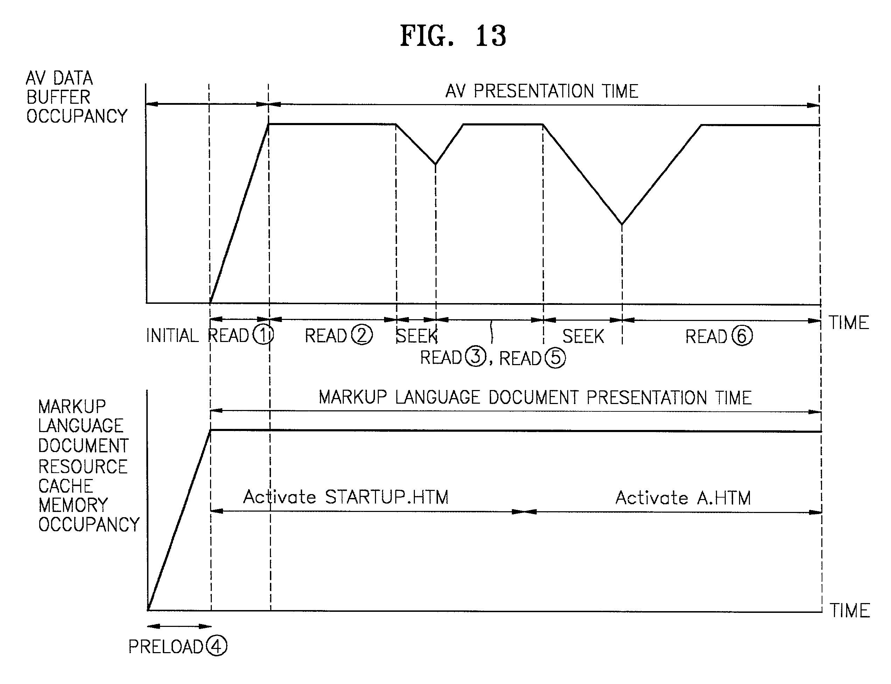

Figure 13 is a reference diagram explaining the effect of the preloading performed according to the present invention when the AV data and the markup language document are recorded in the same order as that of Figure 1.
Figure 13 shows the occupancy of the first memory 2 that buffers the MPEG-coded AV data and the occupancy of the second memory 3 that caches the markup language documents. With reference to Figures 1 and 13, with regard to loading and displaying of the AV data, the reader 1 seeks and reads the file STARTUP.htm, and the presentation engine 5 interprets the preload information included in the file STARTUP.HTM and preloads the file A.HTM④ . Then, the file A.HTM④ is preloaded into the second memory 3. The loaded file STARTUP.HTM becomes activated. Simultaneously, the AV data① selected by the presentation sequence is loaded into the first memory 2 and starts to be displayed . Then, the AV data② is loaded and displayed. After the AV data② is buffered completely, the reader 1 jumps to the position where the AV data③ is recorded and starts to buffer the AV data③ . If the user requests the file A.HTM④ , the presentation engine 5 retrieves and displays the file A.HTM④ preloaded in the second memory 3. That is, the reader 1 does not need to stop buffering the AV data ③ to seek the file A.HTM ④ from the DVD 300 and load it to the second memory 3. Therefore, the reader 1 can perform the buffering seamlessly. When the reader 1 completes the buffering of the AV data ⑤ and jumps to the AV data ⑥ , the amount of the data buffered in the first memory 2 may be consumed. However, since the amount of the data already buffered is sufficient, buffered data insufficiency does not happen. That is, in case of the DVD which supports the interactive mode, if the DVD video and the markup language document need to be displayed synchronously (for example, when an actor is on stage, his brief history is displayed together with the hismoving pictures), the reader 1 does not need to stop buffering the AV data to seek and read the relevant markup language document since the markup language document is already preloaded in the second memory 3.

The next drawings will describe the method for managing the second memory 3 to perform preloading/discarding in a strict manner and the method for performing preloading in such a way that the content remaining in the first memory 2 cannot be exhausted.

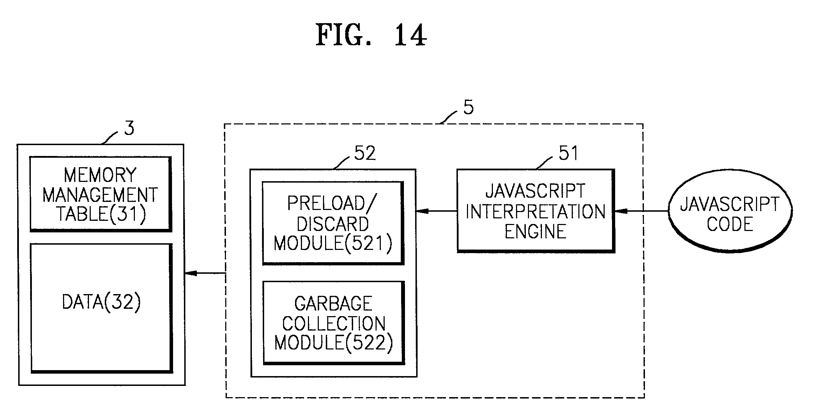

Figure 14 is a detailed diagram of a part of the reproducing apparatus of Figure 3.

With reference to Figure 14, the second memory 3 includes a memory management table 31 and a data 32. The memory management table 31 has the information necessary to manage the data recorded in the data 32. In the data 32, the markup language document which is preloaded is recorded. The presentation engine 5 includes a JavaScript interpretation engine 51 and an execution module 52. The execution module 52 includes a preloading/discarding module 521 and a garbage collection module 522. The garbage collection module 522 will be explained later.

The JavaScript interpretation engine 51 according to the embodiment invokes the API prepared in JavaScript. The preload/discard module 521 and the garbage collection module 522 perform preloading/discarding garbage collection respectively.

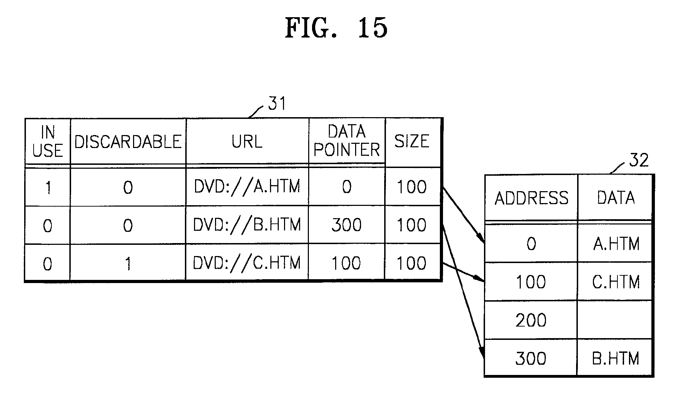

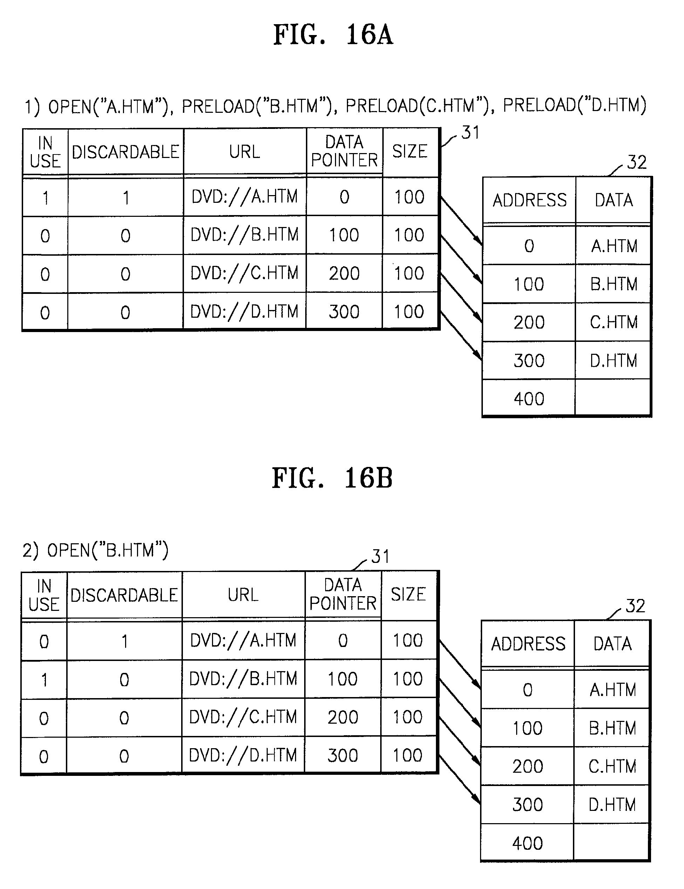

Figures 15 and 16A through 16F are memory maps explaining the method of managing a memory management table 31 and a data 32 by performing preloading, discarding, and garbage collection.

With reference to Figure 15, the memory management table 31 includes the status information of the file to be preloaded, the path of the stored file to be preloaded, the information on the data pointer, and the data size. "In use" indicates whether the data is used or not used. "Discardable" indicates whether the data can be discarded or not. "URL" indicates the path information, "data pointer" indicates the starting address of the data in cache memory space, and "size" indicates the data size. Currently, in the data 32, files A.HTM, C.HTM, and C.HTM are loaded.

With reference to Figure 16A, the file a.htm is in use. If the files B.HTM, C.HTM , and D.HTM are preloaded, since the file A.HTM is in use, the "in use" value for the file A.HTM is 1. Because the other files are not open, their "in use" values are 0.

With reference to Figure 16B, use of the file A.HTM is completed, and the file B.HTM becomes in use. Therefore, the "in use" values for the files A.HTM and the B.HTM are 0 and 1 respectively.

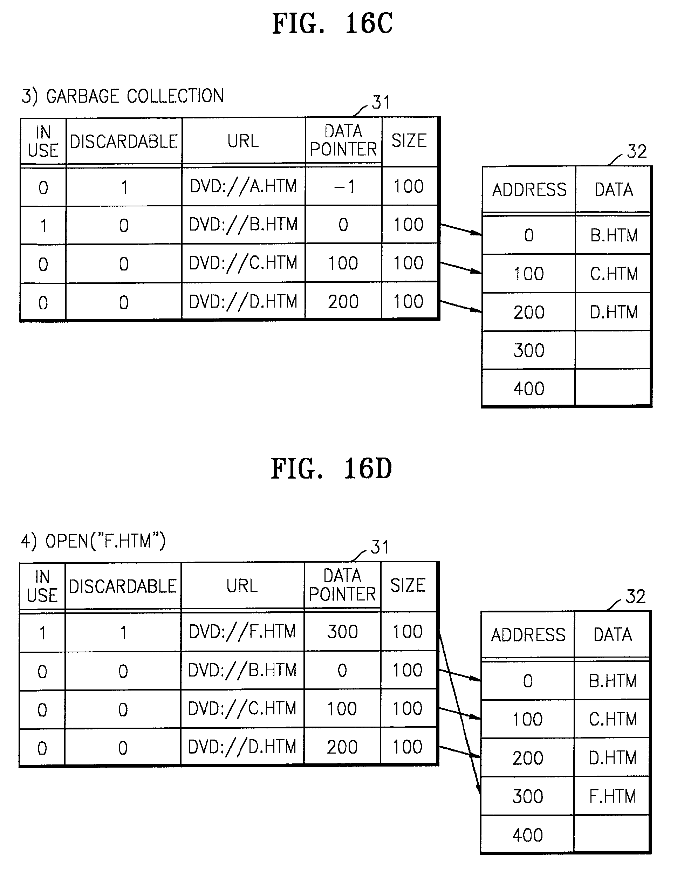

With reference to Figure 16C, garbage collection of the file A.HTM is performed. If garbage collection is performed, the file a.htm is discarded from the data 32, and the file B.HTM, C.HTM, and D.HTMare realigned for memory compaction. The "data pointer" value of the file a.htm is marked as -1, which means that the relevant file does not exist in the data 32.

With reference to Figure 16D, the file F.HTMis in use. The file F.HTM is stored in some position the file a.htm shown in Figure 16C was stored in the memory management table 31. The "data pointer" value indicates the starting address where the file F.HTM is recorded.

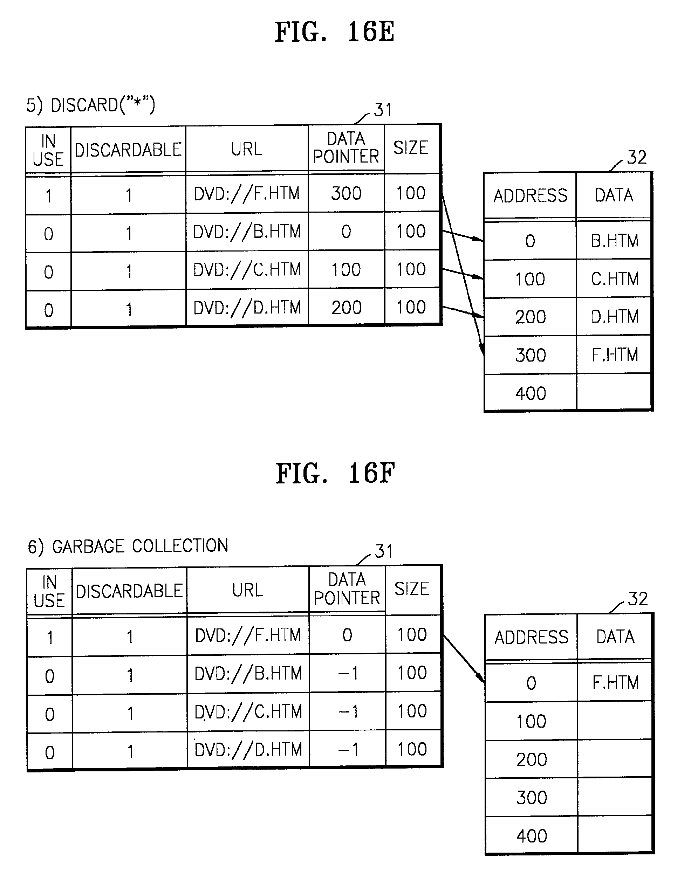

With reference to Figure 16E, the file B.HTM, C.HTMand D.HTMare discarded. Therefore, the "discardable" values for the filesB.HTM, C.HTM, and D.HTM are changed to 1.

With reference to Figure 16F, garbage collection of the file B.HTM, C.HTM, and D.HTM are performed. Therefore, the "data pointer" values for filesB.HTM, C.HTM and D.HTMare -1. The files B.HTM,C.HTMand D.HTMthat are recorded in the data 32 are discarded and the remaining file F.HTMis realigned.

As above described, the second memory 3 can be managed effectively through preloading/discarding and garbage collection.

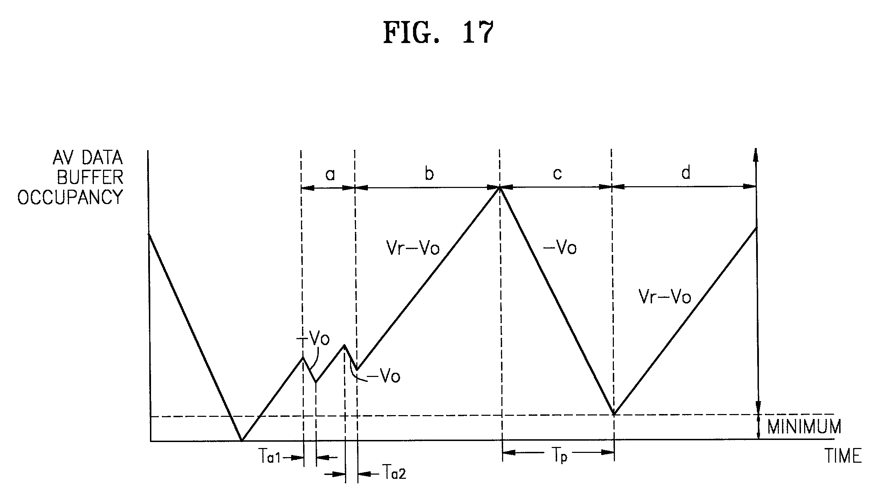

Figure 17 is a reference diagram showing a case where the AV data is loaded into and exhausted in the first memory 2.

With reference to Figure 17, for interval $Ta_1$ or $Ta_2$ of section "a" where a jump to an angle block occurs, the AV data is only consumed without filling. Therefore, the AV data is reduced at the speed of Vo. The angle block includes the data of a same scene that is shot from different angles. Once the data that is shot from an angle is selected, the data is reproduced, and one shot from the remaining angles is skipped. As a result, it is inevitable that a jump occurs in the angle block. If the jump is completed and the AV data is read, other data is buffered. As shown in section "b", if the AV data is read and consumed at speeds of Vr and Vo respectively, the AV data is buffered at a speed of Vr-Vo. For section "c", if the markup language document is preloaded, the reader 1 stops reading the AV data, and the data is consumed at the speed of Vo since the markup language document is preloaded. For section "d", because AV data is buffered again, the AV data is buffered at the speed of Vr-Vo, just as in section "b". The horizontal dotted line indicates the minimum amount of AV data that is supposed to be buffered.

For successful buffering of the first memory 2 and preloading according to the present invention (to prevent data insufficiency in the first memory), the amount of data remaining should be larger than that of the data which is reduced due to the preloading for section "c".

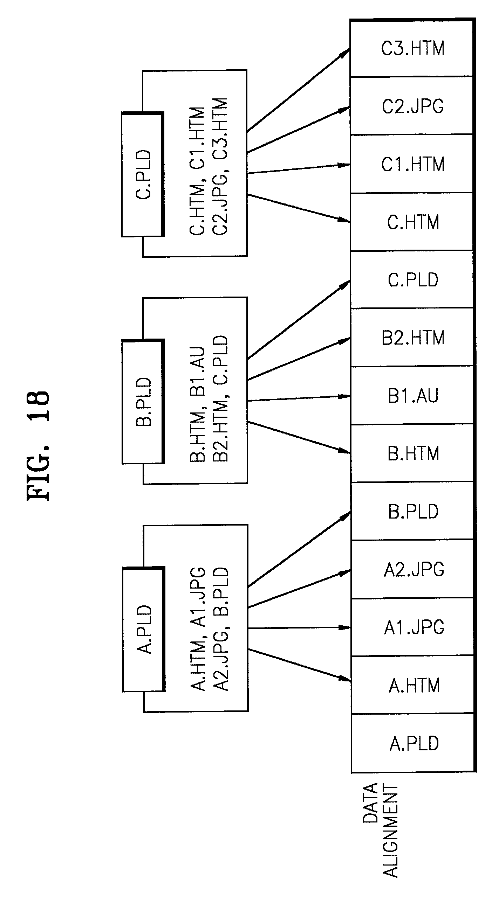

To guarantee a seamless reproduction, the reader 1 should read the file to be preloaded as continuously as possible. Therefore, in the file system of the reproducing medium, the data should be aligned in such a way that one PLD file (file to be preloaded) nests other PLD files as shown in Figure 18 so that the content of the PLD file can be read seamlessly.

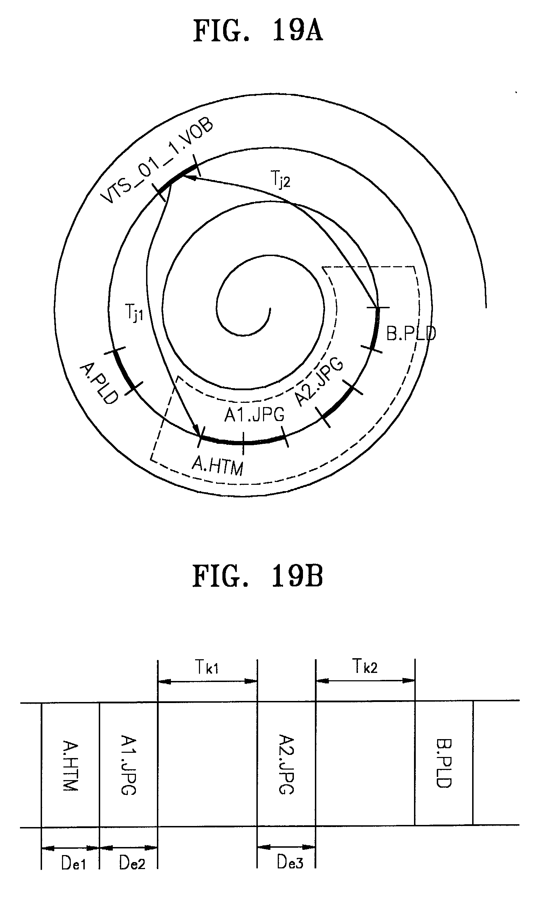

Figure 19A is an outline diagram of the DVD 300 containing the PLD file of Figure 18.

With reference to Figures 19A and 19B, the reader 1 buffers video file VTS0_1.VOB in the second memory 3, and preloads the files A.HTM, A1.JPG, and A2.JPG listed in the preload list file A.PLD and further preloads the file B.PLD, which is the preload list file, and buffers the video file VTS0_1.VOB.

Tj means the time of the access to the PLD file. That is, in Tj = Tj1 + Tj2, Tj1 is the time taken to jump the video file from VTS0_1.VOB to the file A1.JPG, and Tj2 is the time taken to jump to the video file VTS0_1.VOB again after the file B.PLD is read. De indicates the size of the data of the PLD file. That is, for De = De1 + De2 + De3, De1, De2, and De3 indicate the sizes of the files A.HTM, A1.JPG and A2.JPG, respectively. Tk indicates the internal jump time when the PLD file is read. That is, for Tk = Tk1 + Tk2, Tk1 indicates the time taken to jump from the file A1.JPG to the file A2.JPG, and Tk2 indicates the time taken to jump from the file A2.JPG to the file B.PLD.

The relationship between the access distance and the access time with regard to AV data recorded in the disc can be set as follows. Here, N is the number of sectors.

| Access distance | 0 to 210 | to 5000 | to 10,000 | to 15,000 | to 20,000 | over 20,000 |
|---|---|---|---|---|---|---|
| Access time (msec) | $1.4 \times N$ | 310 | 360 | 390 | 410 | 1500 |

According to the present invention, the condition for preventing data insufficiency in the first memory 2 can be indicated as follows.

[Formula 1]

$$Vo \times Tp < (Vr-Vo) \times (tN\_ecc \times 2048 \times 8 \times 16/Vr) - (Vo \times Ta) - Bs$$

Vo: The speed at which the AV data is consumed from the first memory 2 or from the AV decoder 4.

Tp: The time taken to perform preloading in section "c".

Vr: The speed at which the data is read from the disc 300.

tN_ecc: The number of ECC blocks that should be read before the PLD file is read.

Ta: The total time taken to perform a jump in the angle block.

Bs: The minimum data size that should be secured in the first memory 2 (Here, a memory has 221 sectors as designated by the DVD-Video Spec. 1.0)

With reference to Formula 1, Vo x Tp indicates the amount of data that is consumed due to preloading being performed in section "c" . tN_ecc x 2048 x 8 x 16 is the length (the number of sectors) of the data that is read in section "b" . Vr is the speed at which the data is read. Therefore, tN_ecc x 2048 x 8 x 16/Vr is the time of section "b". That is, (Vr-Vo) x (tN_ecc x 2048 x 8 x 16/Vr) indicates the amount of data that has increased in section "b". Vo x Ta indicates the amount of data that is consumed due to the angle block jump in section "a". Bs indicates the minimum amount of data that should be buffered. Tp indicates 2 x Tj + De/Vr + Tk. The definitions of Tj, De, Vr, and Tk are described above.

Tp, which is the time taken to preload the PLD files designated in files A.PLD, B.PLD, and C.PLD of Figure 18, can be calculated as follows.

$$Vr = 22Mbps,$$

Files (De=1611KB) in A.PLD : Tp=3600msec (=1500msec x 2+1611KB x 8/22000000+0)

Files (De=2685KB) in B.PLD : Tp=4000msec (=1500msec x 2+2685KB x 8/22000000+0)

Files (De=269KB) in C.PLD : Tp=3100msec (=1500msec x 2+269KB x 8/22000000+0)

If the files in A.PLD, B.PLD, and C.PLD should be used in order during the reproduction of the video file VTS_01_1.VOB, the following values should be calculated.

Let the Vo value in the buffering section of the video file VTS_01_1.VOB before the files of A.PLD are read be Va.

Let the Vo value in the buffering section of the video file VTS_01_1.VOB before the files of B.PLD are read be Vb.

Let the Vo value in the buffering section of VTS_01_1.VOB before the files of C.PLD are read be Vc.

On the assumption that there is no jump such as the angle block jump in each section and Bs has 221 sectors ($\fallingdotseq$ 14 ECC blocks), if the relationship between the number of ECC blocks in each section and Va, Vb, and Vc is calculated, the location where the files in A.PLD, B.PLD and C.PLD are read without interruption of the AV data can be found.

For example, on the assumption that Va is 8Mbps, Vb is 6Mbps, and Vc is 4Mbps, tN_ecc can be calculated from Formula 1 as follows.

At least 187 ECC blocks should be read before files in A.PLD are read,

at least 140 ECC blocks should be read before files in B.PLD are read, and

at least 72 ECC blocks should be read before files in C.PLD are read.

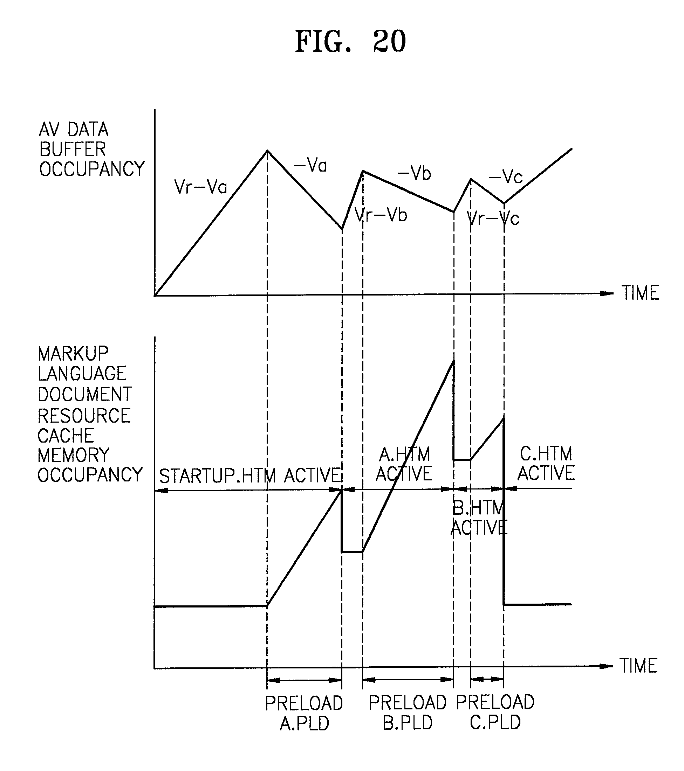

Figure 20 shows the status of the first memory 2 and the second memory 3 according to the above-described embodiments.

With reference to Figure 20, when the file STARTUP.HTM is active, the amount of data in the first memory 2 is increased at the speed of Vr-Va. If the files of A.PLD are preloaded, the amount of data in the first memory 2 is consumed at the speed of Va. If the files of A.PLD are preloaded completely and the file A.HTM is active, the amount of data is buffered increasingly at the speed of Vr-Vb. If the files of B.PLD are preloaded, the amount of data in the first memory 2 is consumed at the speed of Vb. If the files of B.PLD are preloaded completely and the file B.HTM is activated, the amount of the data is buffered increasingly at the speed of Vr-Vc. Here, the amount of the data is reduced drastically at the point where the preloading of the second memory 3 is completed because the PLD file is requested to be discarded and garbage collection is performed.

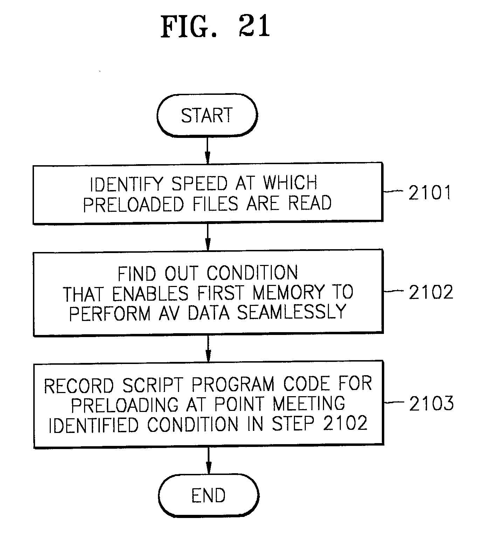

Figure 21 is a flowchart showing a recording method according to a preferred embodiment of the present invention.

With reference to Figure 21, a content creator identifies the speed at which the PLD file is read in step 2101. In step 2102, the content creator finds out the condition that enables the first memory 2 to perform relevant AV data seamlessly. The condition is described in detail above. The content creator records the script program code for preloading at the point meeting the identified condition in step 2103. That is, a relevant API is invoked to record the script program code in such a way that the AV data is preloaded seamlessly after minimum AV data is buffered in the first memory 2.

As described above, in a case where the AV data recorded in the information storage medium such as DVD is reproduced and displayed through the markup language document, the present invention relates to the information storage medium that includes the markup language document and prevents the interruption of reproducing the moving pictures, and a reproducing apparatus and a reproducing method. In addition, since the present invention can identify the type of the files to be preloaded and discarded, more effective preloading and discarding can be performed.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. An information storage medium comprising:

   audio/video AV data; and

   a markup language document including a preload information that orders a reproducing apparatus to read a file to be preloaded and to store it into a memory, for displaying the AV data which is decoded and reproduced.

2. The medium of claim 1 further comprising:

   navigation data on the AV data,

   wherein the AV data is decoded in an AV data stream with reference to the navigation data.

3. The medium of claim 1 or 2 further comprising:

   at least one file to be preloaded.

4. The medium of any preceding claim further comprising:

   a preload list file which includes one or more files to be preloaded,

   wherein the preload information is implemented by a link tag where the location information of the preload list file is recorded.

5. The medium of claim 4, wherein the link tag is inserted into a head area bounded by head tags.

6. The medium of claim 4 or 5, wherein the location information comprises the path of the preload list file and a resource locator, which indicates one of the memory, the information storage medium, and an Internet server, which is attached to the path of the preload list file.

7. The medium of any preceding claim, wherein the preload information is implemented by an Application Program Interface (API) which has the location information of the preload list file as a parameter.

8. The medium of claim 7, wherein the API is a JavaScript API or a Java applet API.

9. The medium of claim 4 or any claim dependent thereon, wherein the preload list file includes the location information and the property of the file to be preloaded.

10. The medium of claim 9, wherein the preload list file further includes information on the amount of memory necessary to store the file to be preloaded.

11. The medium of any preceding claim, wherein the markup language document comprises:

   a discard list file which contains a discard list; and
   discard information which indicates that a file to be discarded that is recorded in the discard list should be discarded from the memory.

12. The medium of claim 11, wherein the discard information is implemented by an API which has the location information of the discard list file as a parameter.

**13.** The medium of any of claims 1 to 10, wherein the markup language document further comprises:

discard information which commands that the file to be discarded in the discard list should be discarded from the memory.

**14.** The medium of claim 13, wherein the discard information comprises an API which has the location information of the discard list file as a parameter.

**15.** A method for reproducing AV data recorded in an information storage medium by invoking the AV data through a markup language document, the method comprising:

(a) interpreting preload information included in the read markup language document;

(b) invoking a file to be preloaded based on the preload information and storing the file to a cache memory;

(c) reading the AV data and storing it in a buffer memory; and

(d) reading the AV data and the file to be preloaded from the buffer memory and the cache memory, respectively, and displaying them based on the markup language document.

**16.** The method of claim 15, wherein (a) comprises:

(a1) identifying the path and property of the file to be preloaded.

**17.** The method of claim 16, wherein in (a1), the path of a preload list file that is recorded in a link tag inserted in a head region bounded by head tags is identified.

**18.** The method of claim 15, 16 or 17, wherein (b) comprises:

(b1) reading the file to be preloaded from the identified path; and

(b2) processing and storing the file to be preloaded depending on the identified property.

**19.** The method of any of claims 15 to 18, wherein in steps (a) and (b), an API, which is inserted into a body region bounded by body tags, has the path of a preload list file as a parameter, and invokes the file to be preloaded in the preload list file, is interpreted and executed.

**20.** The method of any of claims 15 to 19, wherein (b) comprises:

invoking the file to be preloaded from the information storage medium.

**21.** The method of any of claims 15 to 20, wherein (b) comprises:

invoking the file to be preloaded from an Internet server.

**22.** An apparatus for reproducing AV data recorded in an information storage medium with a markup language document, the apparatus comprising:

a reader (1) for reading a markup language document or AV data;

a memory (2,3) for storing a file to be preloaded or AV data;

an AV decoder (4) for decoding the AV data stored in the memory; and

a presentation engine (5) for requesting that the file to be preloaded be stored in the memory based on the interpreted preload information after interpreting a preload information included in the read markup language document, for requesting that the read AV data be stored in the memory, and for reading the file to be preloaded from the memory and displaying the file together with the AV data outputted by the AV decoder.

**23.** The apparatus of claim 22, wherein the memory comprises:

a buffer memory (2) for storing the AV data; and

a cache memory (3) for storing the file to be preloaded.

**24.** The apparatus of claim 23, wherein the presentation engine (5) identifies the path and the property of the file to be preloaded based on the preload information, invokes the file to be preloaded from the identified path, and stores the file according to the property in the cache memory (3).

**25.** The apparatus of any of claims 22 to 24, wherein the presentation engine (5) requests the reader (1) or an Internet server to send the file to be preloaded.

**26.** The apparatus of any of claims 23 to 25, wherein the preload information further includes the information on the size of the file to be preloaded, and the presentation engine compares the amount of the space remaining in the cache memory (3) with the size of the file to be preloaded and generates an error event if the amount of the space remaining in the cache memory (3) is less than the size of the file to be preloaded.

**27.** The apparatus of any of claims 23 to 26, wherein a resource locator indicates one of the memory, the information storage medium, and an Internet server, which is attached to the path of the preload list file, and
the presentation engine (5) requests the cache memory to send the file to be preloaded if the resource locator attached to the path of the preload list file indicates the cache memory (3), or generates an error event if there is no file to be preloaded in the cache memory (3).

**28.** The apparatus of any of claims 23 to 27, wherein the markup language document includes location information of the discard list file containing the list of a file to be discarded and the discard information instructing that the file to be discarded should be discarded from the cache memory (3), and the presentation engine (5) interprets the discard information and requests the cache memory to discard the file to be discarded.

**29.** A method for performing a preloading, the method comprising:

(a) identifying the speed at which a file to be preloaded is read;

(b) identifying the condition that enables the buffering to be performed in such a way that relevant AV data can be reproduced seamlessly; and

(c) performing the preloading at the time identified to be the optimized condition.

**30.** A method for recording data in an information storage medium comprising:

(a) recording a file to be preloaded;

(b) identifying the speed at which the recorded file to be preloaded is read;

(c) identifying the condition that enables the buffering to be performed in such a way that relevant AV data can be reproduced seamlessly; and

(d) recording source codes for performing the preloading at the time which is identified to be the optimized condition.

**31.** A method for managing a memory for preloading, the method comprising:

(a) recording a memory management table containing the status information of a file to be preloaded; and

(b) discarding the file to be preloaded based on its status information.

**32.** The method of claim 31 further comprising:

(c) performing garbage collection on the file to be preloaded based on its status information.

**33.** The method of claim 32, wherein (b) comprises:

indicating the status as "not in use" and "discardable" when the use of the file to be preloaded is finished.

**34.** The method of claim 33, wherein (c) comprises:

(c1) discarding the file to be preloaded physically if it is not in use and is discardable; and

(c2) indicating the fact that the file to be preloaded is discarded and no longer exists as the status information.

**35.** The method of claim 34, wherein (c) further comprises:

(c3) realigning files to be preloaded, which are recorded in the memory.

EP 1 267 352 A2

FIG. 1

19

# FIG. 2

AV DATA BUFFER OCCUPANCY

BUFFERING TIME | AV PRESENTATION TIME

INTERRUPTION MAY OCCUR

TIME

INITIAL READ① | READ② | SEEK | READ③ | READ⑤ | SEEK | READ⑥

MARKUP LANGUAGE DOCUMENT PRESENTATION TIME

MARKUP LANGUAGE DOCUMENT RESOURCE CACHE MEMORY OCCUPANCY

ACTIVATE STARTUP.HTM

ACTIVATE A.HTM

TIME

SEEK+LOAD

SEEK+LOAD④

EP 1 267 352 A2

# FIG. 3

# FIG. 4A

```
(ROOT DIRECTORY)
   |
   |---(VIDEO_TS)
   |        |--------[ VIDEO_TS.IFO ]
   |        |--------[ VTS_01_0.IFO ]
   |        |--------[ VTS_01_0.VOB ]
   |        |--------[ VTS_01_1.VOB ]
   |                        ⋮
   |
   |---(DVD_ENAV)
   |        |--------[ STARTUP.HTM ]
   |        |--------[ STARTUP.PLD ]
   |        |--------[ A.HTM ]
   |        |--------[ A.PNG ]
   |                      ⋮
   |
   |------[ OTHER-FILES ]
```

( ) DIRECTORY

[ ] FILE

# FIG. 4B

```
ROOT DIRECTORY
    │
    ├── VIDEO_TS
    │       ├── VIDEO_TS.IFO
    │       ├── VTS_01_0.IFO
    │       ├── VTS_01_0.VOB
    │       └── VTS_01_1.VOB
    │              ⋮
    │
    ├── DVD_ENAV
    │       ├── STARTUP.HTM
    │       ├── A.HTM
    │       └── A.PNG
    │              ⋮
    │
    └── OTHER-FILES
```

⬭ DIRECTORY

▭ FILE

# FIG. 5A

VOLUME SPACE

| VOLUME AND FILE CONTROL INFORMATION SECTION | DVD VIDEO DATA | DVD INTERACTIVE DATA | OTHER DATA |

VIDEO_TS.IFO/VTS_01_0.IFO/
VTS_01_1.VOB ...

STARTUP.HTM/STARTUP.PLD/A.HTM
A.PNG ...

EP 1 267 352 A2

# FIG. 5B

EP 1 267 352 A2

VOLUME SPACE

| VOLUME AND FILE CONTROL INFORMATION SECTION | DVD VIDEO DATA | DVD INTERACTIVE DATA | OTHER DATA |

VIDEO_TS.IFO/VTS_01_0.IFO/
VTS_01_1.VOB ...

STARTUP.HTM/A.HTM/A.PNG ...

# FIG. 6

START

READ HTML DOCUMENT ── 601

INTERPRET PRELOAD INFORMATION ── 602

FILES TO BE PRELOADED IS STORED IN CACHE MEMORY ── 603

READ AV DATA FROM DVD, AND STORES AV DATA IN BUFFER MEMORY ── 604

AV DATA IS READ FROM BUFFER MEMORY AND DECODED ── 605

INVOKE FILES TO BE PRELOAD FROM CACHE MEMORY AND DISPLAY AV DATA STREAM DECODED BY AV DECODER IN DISPLAY WINDOW DEFINED BY MARKUP LANGUAGE DOCUMENT ── 606

END

# FIG. 7

```
        ┌─────────┐
        │  START  │
        └─────────┘
             │
             ▼
   ┌─────────────────────┐
   │  IDENTIFY PATH OF    │── 701
   │  PRELOAD LIST FILE   │
   └─────────────────────┘
             │
             ▼
   ┌─────────────────────┐
   │ READ PRELOAD LIST FILE│── 702
   │ FROM IDENTIFIED PATH │
   └─────────────────────┘
             │
             ▼
   ┌─────────────────────┐
   │   IDENTIFY FILES     │── 703
   │  TO BE PRELOADED     │
   └─────────────────────┘
             │
             ▼
        ┌─────────┐
        │   END   │
        └─────────┘
```

# FIG. 8

```
        ┌─────────┐
        │  START  │
        └─────────┘
             │
             ▼
   ┌──────────────────────────────┐
   │  IDENTIFY PATH OF PRELOAD      │── 801
   │ LIST FILE RECORDED IN LINK TAG │
   │ AND RETRIEVE PRELOAD LIST FILE │
   └──────────────────────────────┘
             │
             ▼
   ┌──────────────────────────────┐
   │   INTERPRET PRELOAD LIST FILE, │
   │ INCLUDING PRELOAD TAG WHICH HAS│
   │     PATHS AND TYPES OF FILES   │── 802
   │ TO BE PRELOADED AS PARAMETERS, │
   │    AND PERFORM PRELOADING      │
   └──────────────────────────────┘
             │
             ▼
        ┌─────────┐
        │   END   │
        └─────────┘
```

# FIG. 9A

START

INVOKE API, WHICH IS INSERTED INTO THE REGION BOUNDED BY SCRIPT TAG AND HAS PATH OF PRELOAD LIST FILE AS PARAMETERS, AND RETRIEVE PRELOAD LIST FILE — 901a

INTERPRET PRELOAD LIST FILE, INCLUDING PRELOAD TAG HAVING PATHS AND TYPES OF FILES TO BE PRELOADED AS ATTRIBUTES, AND PERFORM PRELOADING — 901b

END

# FIG. 9B

START

INVOKE API, WHICH IS INSERTED INTO THE REGION BOUNDED BY SCRIPT TAG AND HAS PATH AND TYPE OF FILE TO BE PRELOADED AS PARAMETERS, AND STORE FILE TO BE PRELOADED IN MEMORY — 901b

END

# FIG. 10

START

READ THE PRELOAD LIST FILE 1001

INTERPRET PRELOAD LIST FILE 1002

AMOUNT SIZE OF FILES TO BE PRELOADED $\leq$ REMAINING CAPACITY OF THE CACHE MEMORY? 1003

NO

YES

PERFORM PRELOADING 1004

ERROR SIGNAL IS GENERATED 1005

START

# FIG. 11

```
        START

  INTERPRET              ── 1101
  DISCARD INFORMATION

  DISCARD FILES TO BE DISCARDED   ── 1102
  FROM CACHE MEMORY

         END
```

# FIG. 12

```
        START

  API, WHICH HAS PATH OF DISCARD
  LIST FILE AS A PARAMETER, DISCARDS     ── 1201
  FILES TO BE DISCARD THAT ARE LISTED IN
  DISCARD LIST FILE FROM CACHE MEMORY

         END
```

FIG. 13

# FIG. 14

EP 1 267 352 A2

# FIG. 15

| IN USE | DISCARDABLE | URL | DATA POINTER | SIZE |
|--------|-------------|-----|--------------|------|
| 1 | 0 | DVD://A.HTM | 0 | 100 |
| 0 | 0 | DVD://B.HTM | 300 | 100 |
| 0 | 1 | DVD://C.HTM | 100 | 100 |

| ADDRESS | DATA |
|---------|------|
| 0 | A.HTM |
| 100 | C.HTM |
| 200 | |
| 300 | B.HTM |

# FIG. 16A

1) OPEN("A.HTM"), PRELOAD("B.HTM"), PRELOAD(C.HTM"), PRELOAD("D.HTM)

| IN USE | DISCARDABLE | URL | DATA POINTER | SIZE |
|---|---|---|---|---|
| 1 | 1 | DVD://A.HTM | 0 | 100 |
| 0 | 0 | DVD://B.HTM | 100 | 100 |
| 0 | 0 | DVD://C.HTM | 200 | 100 |
| 0 | 0 | DVD://D.HTM | 300 | 100 |

31

| ADDRESS | DATA |
|---|---|
| 0 | A.HTM |
| 100 | B.HTM |
| 200 | C.HTM |
| 300 | D.HTM |
| 400 | |

32

# FIG. 16B

2) OPEN("B.HTM")

| IN USE | DISCARDABLE | URL | DATA POINTER | SIZE |
|---|---|---|---|---|
| 0 | 1 | DVD://A.HTM | 0 | 100 |
| 1 | 0 | DVD://B.HTM | 100 | 100 |
| 0 | 0 | DVD://C.HTM | 200 | 100 |
| 0 | 0 | DVD://D.HTM | 300 | 100 |

31

| ADDRESS | DATA |
|---|---|
| 0 | A.HTM |
| 100 | B.HTM |
| 200 | C.HTM |
| 300 | D.HTM |
| 400 | |

32

# FIG. 16C

3) GARBAGE COLLECTION

31

| IN USE | DISCARDABLE | URL | DATA POINTER | SIZE |
|--------|-------------|-----|--------------|------|
| 0 | 1 | DVD://A.HTM | −1 | 100 |
| 1 | 0 | DVD://B.HTM | 0 | 100 |
| 0 | 0 | DVD://C.HTM | 100 | 100 |
| 0 | 0 | DVD://D.HTM | 200 | 100 |

32

| ADDRESS | DATA |
|---------|------|
| 0 | B.HTM |
| 100 | C.HTM |
| 200 | D.HTM |
| 300 | |
| 400 | |

# FIG. 16D

4) OPEN("F.HTM")

31

| IN USE | DISCARDABLE | URL | DATA POINTER | SIZE |
|--------|-------------|-----|--------------|------|
| 1 | 1 | DVD://F.HTM | 300 | 100 |
| 0 | 0 | DVD://B.HTM | 0 | 100 |
| 0 | 0 | DVD://C.HTM | 100 | 100 |
| 0 | 0 | DVD://D.HTM | 200 | 100 |

32

| ADDRESS | DATA |
|---------|------|
| 0 | B.HTM |
| 100 | C.HTM |
| 200 | D.HTM |
| 300 | F.HTM |
| 400 | |

## FIG. 16E

5) DISCARD("*")                                    31

| IN USE | DISCARDABLE | URL | DATA POINTER | SIZE |
|---|---|---|---|---|
| 1 | 1 | DVD://F.HTM | 300 | 100 |
| 0 | 1 | DVD://B.HTM | 0 | 100 |
| 0 | 1 | DVD://C.HTM | 100 | 100 |
| 0 | 1 | DVD://D.HTM | 200 | 100 |

32

| ADDRESS | DATA |
|---|---|
| 0 | B.HTM |
| 100 | C.HTM |
| 200 | D.HTM |
| 300 | F.HTM |
| 400 | |

## FIG. 16F

6) GARBAGE COLLECTION                              31

| IN USE | DISCARDABLE | URL | DATA POINTER | SIZE |
|---|---|---|---|---|
| 1 | 1 | DVD://F.HTM | 0 | 100 |
| 0 | 1 | DVD://B.HTM | −1 | 100 |
| 0 | 1 | DVD://C.HTM | −1 | 100 |
| 0 | 1 | DVD://D.HTM | −1 | 100 |

32

| ADDRESS | DATA |
|---|---|
| 0 | F.HTM |
| 100 | |
| 200 | |
| 300 | |
| 400 | |

# FIG. 17

FIG. 18

A.PLD

A.HTM, A1.JPG
A2.JPG, B.PLD

B.PLD

B.HTM, B1.AU
B2.HTM, C.PLD

C.PLD

C.HTM, C1.HTM
C2.JPG, C3.HTM

DATA
ALIGNMENT

| C3.HTM |
| C2.JPG |
| C1.HTM |
| C.HTM |
| C.PLD |
| B2.HTM |
| B1.AU |
| B.HTM |
| B.PLD |
| A2.JPG |
| A1.JPG |
| A.HTM |
| A.PLD |

# FIG. 19A

# FIG. 19B

# FIG. 20

AV DATA
BUFFER
OCCUPANCY

Vr−Va   −Va   −Vb   −Vc

Vr−Vb   Vr−Vc

TIME

MARKUP
LANGUAGE
DOCUMENT
RESOURCE
CACHE
MEMORY
OCCUPANCY

STARTUP.HTM ACTIVE   A.HTM ACTIVE   C.HTM ACTIVE

B.HTM ACTIVE

TIME

PRELOAD A.PLD   PRELOAD B.PLD   PRELOAD C.PLD

# FIG. 21

```
                    ┌─────────┐
                    │  START  │
                    └─────────┘
                         │
                         ▼
        ┌───────────────────────────────────┐
        │     IDENTIFY SPEED AT WHICH        │──── 2101
        │    PRELOADED FILES ARE READ        │
        └───────────────────────────────────┘
                         │
                         ▼
        ┌───────────────────────────────────┐
        │         FIND OUT CONDITION         │
        │    THAT ENABLES FIRST MEMORY TO    │──── 2102
        │    PERFORM AV DATA SEAMLESSLY      │
        └───────────────────────────────────┘
                         │
                         ▼
        ┌───────────────────────────────────┐
        │   RECORD SCRIPT PROGRAM CODE FOR   │
        │      PRELOADING AT POINT MEETING   │──── 2103
        │   IDENTIFIED CONDITION IN STEP 2102│
        └───────────────────────────────────┘
                         │
                         ▼
                    ┌─────────┐
                    │   END   │
                    └─────────┘
```